# EUROPEAN PATENT APPLICATION

(11) **EP 2 860 228 A1**
(43) Date of publication of application: **15.04.2015**
(21) Application number: 14188464.3
(22) Date of filing: 10.10.2014
(51) Int. Cl.: C09D 127/12, F02M 25/07, H05B 3/10, H01C 7/00, F01N 3/20

(54) **HEATER ASSEMBLY WITH PROTECTIVE COATING AND METHOD OF APPLYING SAME**

(30) Priority: 14.10.2013 US 201314053199
(71) Applicant: General Electric Company, Schenectady, New York 12345 (US)
(72) Inventor: Seaton, John David, Schenectady, NY 12345 (US)
(74) Representative: P&TS SA (AG, Ltd.)

(57) **Abstract**

Heater assemblies and other electrical components are provided having protective coatings that allow for use in high temperature and highly corrosive environments. Methods for applying protective coatings are also provided. In one embodiment, a component is provided and includes a protective coating that encapsulates at least a portion thereof. The component can be, for example, a heating assembly that includes a heating element and at least one lead operably coupled to the heating element, or a component that is disposed within a dosing tank in a selective catalyst reduction system having an engine that is configured to emit an exhaust stream. Methods for coating components are also provided.

## Description

### FIELD

The subject matter disclosed herein relates to electrical components such as heater assemblies and sensors with protective coatings for use in high temperature and highly corrosive environments, including selective catalyst reduction systems.

### BACKGROUND

As environmental regulations become increasingly stringent, new technology is being utilized to permit compliance by combustion engines. For example, within the automotive industry, Selective Catalyst Reduction (SCR) systems and Exhaustive Gas Recirculation (EGR) systems have been developed to limit nitrous oxide (NOx) and particulate emissions.

SCR systems, for example, typically operate by injecting a precisely metered volume of a reductant, such as a urea solution, into the hot exhaust downstream of the engine, where the urea solution breaks down into ammonia and reacts with the exhaust gasses in the presence of a catalytic converter to convert NOx into nitrogen and water. The urea solution can contain about 32.5% urea in demineralized water known as Diesel Exhaust Fluid. This urea solution typically freezes at about -11°C, which thus requires the temperature of the fluid to be monitored and controlled by various electrical components disposed within a tank containing the urea solution. However, the urea solution can be corrosive to traditional electrical components, such as sensors, including thermistors, and heating assemblies.

EGR systems can recycle at least a portion of the exhaust gases back into the engine's combustion chamber. While EGR systems reduce emission of certain pollutants, including NOx, when the exhaust gases are recycled within the engine, engine components are exposed to high concentrations of these gases for long periods of time. This results in elevated acid levels within the EGR system, including nitric and sulfuric acid. The high temperature and highly corrosive environment can negatively affect the functioning of the engine components and sensors, including thermistors, heaters, electrical lead frames, and various other system components that are disposed in the EGR system.

Accordingly, there remains a need for improved electrical components with protective coatings for use in high temperature and highly corrosive environments.

### BRIEF DESCRIPTION

Heater assemblies and other electrical components are provided having protective coatings that allow for use in high temperature and highly corrosive environments. Methods for applying protective coatings are also provided.

In one embodiment, a heater assembly is provided and includes a heating element, at least one lead that can be operatively coupled to the heating element, and a protective coating that encapsulates at least a portion of the heating element. The coating can be applied using various techniques, such as by immersing the heater assembly or portions thereof into a cooled polymer and then withdrawing the sensor assembly. The heater assembly can be used in various applications, such as in SCR systems. Advantageously, the protective coating can protect the heater assembly or component without being electrically conductive. In one exemplary embodiment, the protective coating can be a fluoroelastomeric polymer that is free of carbon black.

In another embodiment, a selective catalyst reduction system is provided and includes an engine with at least one cylinder chamber. The engine can be configured to emit an exhaust stream containing nitrous oxides. Additionally, the SCR system can include a dosing tank fluidly coupled to the exhaust stream and configured to contain a reductant fluid for reducing nitrous oxides in the exhaust stream and a component disposed within the dosing tank. A protective coating, such as a fluoroelastomeric polymer that is free of carbon black, can encapsulate at least a portion of the component. While the configuration of the component can vary, the component can be, for example, a heating element configured to raise a temperature of a reductant fluid in the dosing tank, or a sensor assembly, such as a thermistor having first and second conductive leads extending therefrom.

Methods for coating a heater assembly are also provided, and in one embodiment the method can include suspending a fluoroelastomeric polymer in an organic carrier solvent, adjusting a viscosity of the organic carrier solvent, cooling the suspended fluoroelastomeric polymer to a temperature below ambient temperature, immersing a heater assembly into the cooled fluoroelastomeric polymer, withdrawing the heater assembly from the fluoroelastomeric polymer, permitting at least some of the organic carrier solvent to evaporate after the step of withdrawing the heater assembly, thereby producing a conformal layer of fluoroelastomeric polymer, and curing the conformal layer to produce a coated heater assembly.

### BRIEF DESCRIPTION OF THE DRAWING

These and other features will be more readily understood from the following detailed description taken in conjunction with the accompanying drawings, in which:
FIG. 1 is a side view of one embodiment of a heater assembly with a protective coating;
FIG. 2 is a flow diagram of one embodiment of a method of coating a heater assembly;
FIG. 3 is a schematic diagram of one embodiment of an SCR system using a coated component; and
FIG. 4 is a schematic view of one embodiment of a sensor assembly with a protective coating.

It is noted that the drawings are not necessarily to scale. The drawings are intended to depict only typical aspects of the subject matter disclosed herein, and therefore should not be considered as limiting the scope of the disclosure. In the drawings, like numbering represents like elements between the drawings.

### DETAILED DESCRIPTION

Certain exemplary embodiments will now be described to provide an overall understanding of the principles of the structure, function, manufacture, and use of the devices, systems, and methods disclosed herein.

Electrical components, such as sensors, heaters, lead frames, and various other components, are often disposed in harsh environments that require protection from the immediate environment. For example, heater assemblies and other components disposed in automotive emission reduction systems, such as Selective Catalyst Reduction (SCR) systems and Exhaustive Gas Recycling (EGR) systems, are exposed to high temperatures and/or corrosive conditions. Accordingly, heater assemblies and other electrical components are provided having protective coatings that provide protection from high temperatures and/or highly corrosive environments.

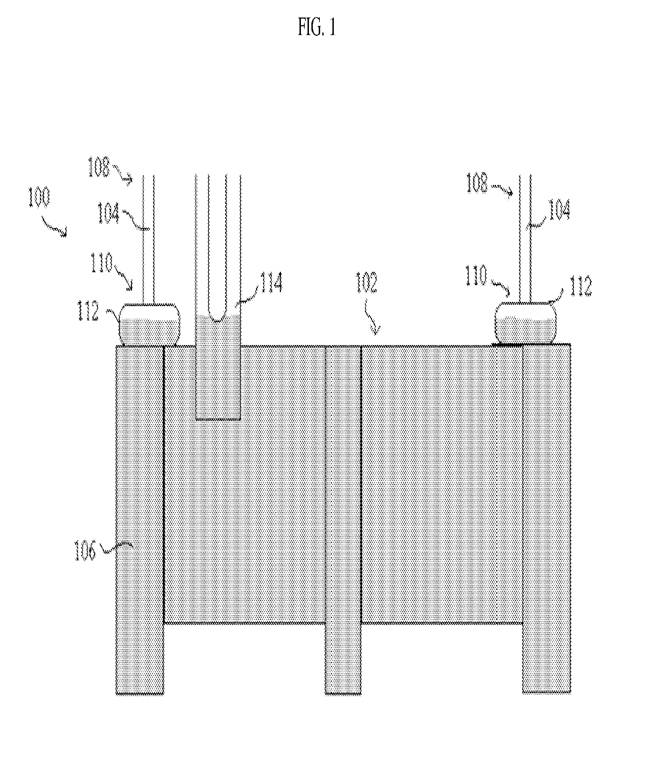

FIG. 1 illustrates one embodiment of a heater assembly 100 that generally includes a heating element 102 for use in modulating, e.g., raising and/or lowering, the temperature of a surrounding fluid. For example, the heater assembly can be configured to heat a urea solution in an SCR system, as will be described below. The heater assembly 100 can include at least one lead 104 that is operably coupled to the heating element 102 with an electrical connector 112 for providing an electrical current to the heating element 102. FIG. 1 illustrates first and second leads coupled to first and second connectors. The heater assembly 100 can also generally include a stabilization member 114 that is configured to mount the heater assembly 100 in a desired location, for example within a tank. Additionally, the heater assembly 100 includes a protective coating 106 that can encapsulate at least a portion of the heater assembly 100, including all or at least part of the heating element 102. In some embodiments, the heater assembly 100 can include a polymer casing layer (not shown) that is disposed over at least a portion of the heating element 102 and either under or on top of the protective coating.

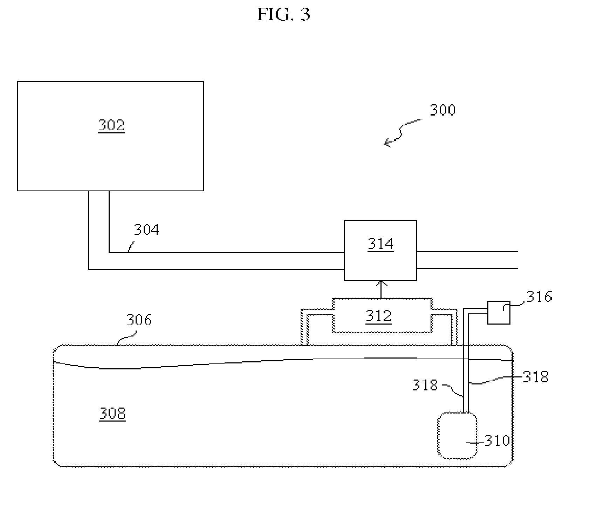

The heating element 102 can have a variety of configurations and it can be configured to modulate the temperature of a surrounding area, *i. e.,* the heating element 102 can be configured to raise and/or lower the temperature of a liquid in a tank. For example, as shown in FIG. 3, the heating element can incorporate a heat sink that is configured to produce heat through electrical resistance Joule heating. The heat sink can be configured to radiate heat. The heating element 102 can be formed of any known heating element material. For example, the heating element 102 can be formed of one or more metals, such as aluminum, nickel, chromium, Nichrome, Kanthal, Cupronickel, molybdenum disilicide, or any other known alloy. Additionally, the heating element can be formed of any known polymers, such as electrically conductive polymers, and/or ceramics such as positive thermal coefficient ceramics. More particularly, the heating element 102 can be formed of an extruded aluminum heat sink.

As mentioned, the heater assembly 100 can include at least one lead 104. In some embodiments, the heater assembly 100 can include any number of leads, such as 1, 2, 3, 4, or 5 leads; more particularly the heater assembly 100 can include two leads 104. The at least one lead 104 can include a proximal end 108 and a distal end 110. In one embodiment, the proximal end 108 of the at least one lead 104 can be electrically or otherwise operably coupled to a control unit (not shown) that is configured to produce an electrical current. The distal end 110 can be operatively coupled to the heating element 102 such that there is an electrical connection from the heating element 102 to the control unit (not shown). For example, a control unit can include a thermistor that is operably coupled to the heater assembly such that when a temperature sensed by the thermistor is below and/or above a certain predetermined temperature (such as the freezing point of a urea solution, e.g., about -11°C), the heater assembly 100 is activated and/or deactivated accordingly. In some embodiments, the at least one lead 104 can be configured to deliver a heat transfer fluid to the heating element 102.

The at least one lead 104 can be formed of any known lead material and can be in the form of an extruded or braided wire, ribbon, tube, and/or any other known lead. For example, the lead can be formed of metals, such as aluminum, copper, brass, lead, zinc, steel, or any other known alloy, polymers, and/or ceramics.

As mentioned above, the heater assembly 100 can optionally include a polymer casing layer (not shown). The polymer casing layer can be configured to encapsulate at least a portion of the heating element 102, the connectors 112, the stabilization member 114, and/or the at least one lead 104. In some embodiments, the polymer casing layer is formed on and in direct contact with at least a portion of the surface of the heating element 102. In other embodiments, the polymer casing layer can be disposed on top of the protective coating. The polymer casing layer can be formed of any known casing material such as polymers and ceramics including phenolic resin, nylons (such as nylon-6,6), epoxy, PVC, polyimide, silicone, polyethylenes (such as high density polyethylene), ceramic cement, lacquer, urethane, shrink sleeving, glass encapsulation, and any combination thereof. For example, the polymer casing can include at least one of an aliphatic polyamide and a high density polyethylene. The polymer casing layer can be formed and deposited by any known method, including the methods for depositing the protective coating described herein.

As shown in FIG. 1, the protective coating 106 encapsulates at least a portion of the heating element 102. In some embodiments, the protective coating 106 can encapsulate the entire heating element 102, as well as a portion of the connectors 112, the stabilization member 114, and/or the at least one lead 104. In certain exemplary embodiments, the protective coating encapsulates the entire heating element 102 and the connectors 112, terminating adjacent to the distal end 110 of the leads 104 and just proximal to a seal that surrounds the connectors 112. Such a configuration can allow the entire assembly to be submerged within a corrosive fluid, as will be discussed in detail below. The protective coating 106 can be disposed on top of the polymer casing layer, or alternatively can be formed directly on the heating element 102. As will be discussed below, the protective coating 106 can be formed in a variety of manners, for example by dip coating. Additional methods of depositing the protective coating 106 are appreciated, including but not limited to, injection molding methods, spray casting, chemical vapor deposition, and any other method of depositing a polymer layer known in the art.

In one exemplary embodiment, the protective coating 106 is made of a fluoroelastomeric polymer. Fluoroelastomeric polymers (FKM) are a class of polymers that exhibit resistance to corrosion. Fluoroelastomeric polymers are typically used to form o-rings, gaskets, and seals for automotive, aerospace and/or industrial applications of machines by injection molding. Since many of these fluoroelastomeric polymers include electrically conductive additives to facilitate the molding process, conventional fluoroelastomeric polymers are undesirable for use with electrical devices, including heating assemblies.

The fluoroelastomeric polymer used for the protective coating 106 is selected to provide an acceptable level of chemical durability to resist the corrosive environment of a SCR system, including resistance to urea, nitric acid, sulfuric acid and biodiesel combustion products at elevated temperatures without including electrically conductive additives. The fluoroelastomeric polymer is designed to function as an electrically insulating coating with dielectric strengths of about 50kV per millimeter or greater. In some embodiments, the resistance value is greater than 100 Mega ohms at 500 volts. The fluoroelastomeric polymer should also have sufficient hardness to safeguard the sensor assembly 100 against physical damage, for example, a Shore A hardness of 60 or greater. Sufficient flexibility to permit the leads 104 to bend is also desirable. The fluoroelastomeric polymer is also selected to exhibit acceptable water immersion resistance (e.g., minimal change of resistance of the heater assembly after 1000 hours of water immersion at 85°C under 5V of power with a 6.81 kilo ohm series resistor) and mechanical properties (e.g., able to endure over 3000 cycles of thermal shock between -40°C and 155°C). The fluoroelastomeric polymer should also be capable of surviving curing temperature of about 200°C without negatively impacting performance. One or more of these properties are present in the harsh environment of the EGR and SCR system, which can include high concentrations of acids at high temperatures. To permit proper coating of the heating assembly 100, the fluoroelastomeric polymer can be capable of being applied by dip coating.

The fluoroelastomeric polymer can be formed from the polymerization product of a reaction mixture that includes a fluorinated or perfluorinated monomer with one or more comonomers. Examples of suitable monomers include vinylidene fluoride and tetrafluoroethylene. Examples of suitable co-monomers include fluorinated propylenes, such as hexafluoropropylene. Further examples of suitable monomers include tetrafluoroethylene and perfluoromethylvinylether. The resulting fluoroelastomeric polymer is typically 60% fluorine or more by weight and is saturated. One suitable fluoroelastomeric polymer is sold by Du Pont under the trade name VITON®. Care must be taken to select a fluoroelastomeric polymer formulation where conductive processing aids, such as carbon black, are omitted (e.g. Non-Black VITON®).

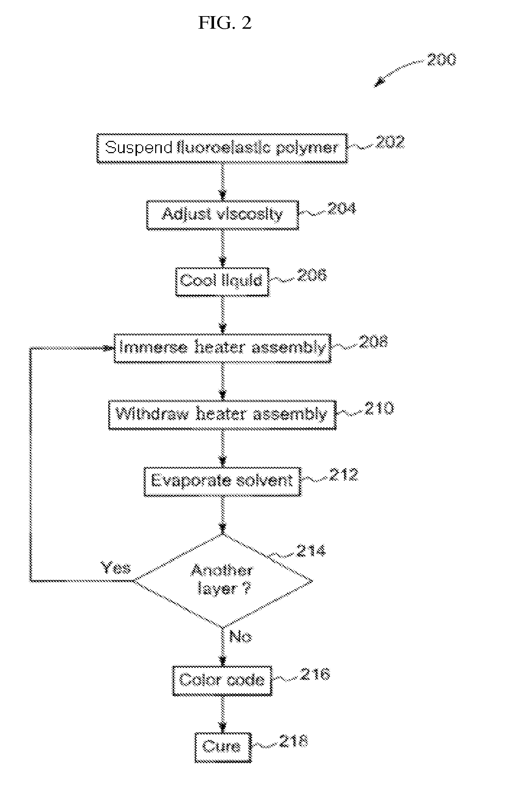

FIG. 2 is a flow diagram depicting one exemplary method 200 for coating a component with a protective coating. It should be noted that although the method 200 is described particularly with respect to the heater assembly 100 of FIG. 1, it can be applied to any desired component. In step 202, a fluoroelastic polymer is suspended in an organic carrier solvent. In one embodiment, an organic carrier solvent with high volatility is selected to permit rapid evaporation after coating. Examples of suitable organic carrier solvents include low molecular weight ketones, such as methylethylketone, acetone, etc. Other suitable organic carrier solvents would be apparent to those skilled in the art after benefitting from reading this specification. A sufficient quantity of the organic carrier solvent is used to provide a, for example, 30% to 50% liquid by weight, based on the desired viscosity. In one embodiment, the fluoroelastic polymer formulation includes solids. Generally, the solids are selected to be chemically inert. Examples of suitable solids include metal oxides such as titanium dioxide and silicon dioxide.

In step 204, the viscosity of the suspended fluoroelastic polymer is adjusted. In one embodiment, the viscosity is adjusted by adding a sufficient amount of the organic carrier solvent to achieve a desired viscosity. The viscosity is adjusted to, for example, a value of between 1000 centipoise and 5000 centipoise. In some embodiments, the viscosity is adjusted by permitting a portion of the organic carrier solvent to evaporate.

In step 206, the liquid is cooled to a temperature below ambient temperature to reduce the rate of evaporation of the organic carrier solvent. The liquid may be cooled to a temperature that is about 10°C cooler than the ambient temperature. In one exemplary embodiment, the ambient temperature is about 25°C and the liquid may be cooled to a temperature of about 15°C.

In step 208, the heater assembly is immersed in the cooled fluoroelastomeric polymer suspension. The heater assembly is immersed such that at least a portion of the heating element is immersed. In some embodiments, the heating assembly can be immersed such that the entire heating element is coated and/or such that the at least one lead, connectors, stabilization member, or portions thereof, are immersed. Also, in some embodiments, the heater assembly can be first coated with a polymer casing layer, such as those described herein.

In step 210, the heater assembly is withdrawn from the cooled fluoroelastomeric polymer. The rate with which step 210 is performed controls the thickness of the resulting layer. When a thick layer is desired, the heater assembly is withdrawn relatively rapidly. The cooled organic carrier solvent contacts the comparatively warm ambient environment and rapidly evaporates to deposit a relatively thick layer of the fluoroelastomeric polymer. When a thin layer is desired, the heater assembly is withdrawn relatively slowly. The cooled organic carrier solvent is given time to flow off of the heater assembly before it contacts the comparatively warm ambient environment. This deposits a relatively thin layer of the fluoroelastomeric polymer. By adjusting the rapidity with which the heater assembly is withdrawn, a layer with a predetermined thickness is produced. In some embodiments, multiple layers are deposited, one atop another, and provide a conformal layer of a predetermined thickness.

In step 212, at least a portion of the organic carrier solvent is permitted to evaporate to form a semisolid conformal layer of the newly deposited fluoroelastomeric polymer. In one embodiment, step 212 further comprises an ambient drying step that lasts for at least two minutes. For example, the newly deposited fluoroelastomeric polymer may be exposed to the ambient environment for about two minutes to permit the organic carrier solvent to evaporate. Since the ambient environment is warm relative to the temperature of the organic carrier solvent, evaporation is facilitated.

In step 214, a determination is made concerning whether or not an additional layer of fluoroelastomeric polymer should be deposited. If another layer is desired, the method 200 returns to step 208 and the heater assembly is immersed in the cooled fluoroelastomeric polymer again. This deposits an additional layer of fluoroelastomeric polymer atop the previously deposited layer(s). If another layer is not desired, step 216 may be executed wherein a portion of the coated heater assembly is dipped in a colorant to provide a coating of a predetermined color for color coding. A variety of compatible colorants are known in the art. In one embodiment, two layers of fluoroelastomeric polymer are provided. In another embodiment, three layers of fluoroelastomeric polymer are provided. Advantageously, since the conformal layer(s) are applied using a dip coating technique, the thickness of the resulting coating is easily controlled. A coating thickness (*i.e.,* immersion depth) of 30 mm or greater can be achieved using this technique.

In step 218, the layer(s) of fluoroelastomeric polymer are cured to encapsulate the heater assembly. In one embodiment, the curing step includes heating the coated heater assembly to a predetermined temperature for a predetermined time that is selected to remove the organic carrier solvent and cross-link (vulcanize) the fluoroelastic polymer. For example, the coated heater assembly may be heated to a temperature of about 100°C for about thirty minutes. The coated heater assembly may also be subjected to a stepwise heating process that both drives off any residual organic carrier solvent as well as cures the layers of fluoroelastomeric polymer to seal the heater assembly within the fluoroelastomeric polymer. An exemplary stepwise heating process heats the cured, coated heater assembly to a temperature of about 90°C for a predetermined period of time. Thereafter, the temperature is increased to about 160°C for a predetermined period of time. Two additional stepwise heating processes are likewise performed at temperatures of 180°C and 200°C.

Components, such as sensors or heater assemblies, coated using the described methods are ideal for use in corrosive environments. For example, thermistors coated in accordance with the teachings herein show less than a 3% shift in resistance after operating at 85°C for 2000 hours immersed in water. The coated thermistors likewise showed less than a 0.4% shift in resistance after aging at temperatures of up to 170°C for 1000 hours. In comparison, conventional thermistors showed a significantly larger shift in resistance and mechanical degradation when subjected to the same conditions. Heating assemblies coated in accordance with the teachings herein prevent corrosives, such as moisture and ammonia, from penetrating to the surface of the heating element and heat sink. In this respect, the coating is shown to prevent corrosion.

In use, electrical components, such as sensors, pumps, and the heater assembly 100, can be used in automotive exhaust reduction systems such as SCR and EGR. FIG. 3 illustrates an embodiment of an SCR system 300. The SCR system 300 can include an engine 302 with at least one cylinder chamber. The engine can be configured to emit an exhaust stream 304 containing nitrous oxides. The exhaust stream 304 can be in fluid communication with a dosing tank 306 that is configured to contain a reductant fluid 308 for reducing nitrous oxides in the exhaust stream 304. In some embodiments, the dosing tank 306 can be fluidly coupled to the exhaust stream 304 by a pump 312 that is configured to receive the reductant fluid 308 from the dosing tank 306 and to pump the reductant fluid 308 through an injector 314 that can include a catalytic converter. The SCR system 300 also includes a component 310 disposed with the dosing tank 306. The component 310 can have a protective coating encapsulating at least a portion of the component 310 as described herein. The protective coating can be a fluoroelastomeric polymer that is free of carbon black. Additionally, the component 310 can be operably coupled to a control unit 316 with at least one lead 318.

The engine 302 can be any combustion engine, for example, an automotive combustion engine having at least one cylinder chamber. Additionally, the engine can include alternative emission reduction systems, such as EGR.

The dosing tank 306 can be formed of any known material capable of holding corrosive fluids, such as the reductant fluid 308. For example, the dosing tank 306 can be formed of a polymer or metal.

The reductant fluid can be any fluid that is known to be used in an SCR application to reduce NOx to nitrogen and water, for example a urea solution. In some embodiments, the urea solution can contain about 32.5% urea in demineralized water known as Diesel Exhaust Fluid. A person skilled in the art will understand that from time to time, the reductant fluid can become frozen thus requiring heating of the reductant fluid before it can be pumped through the SCR system.

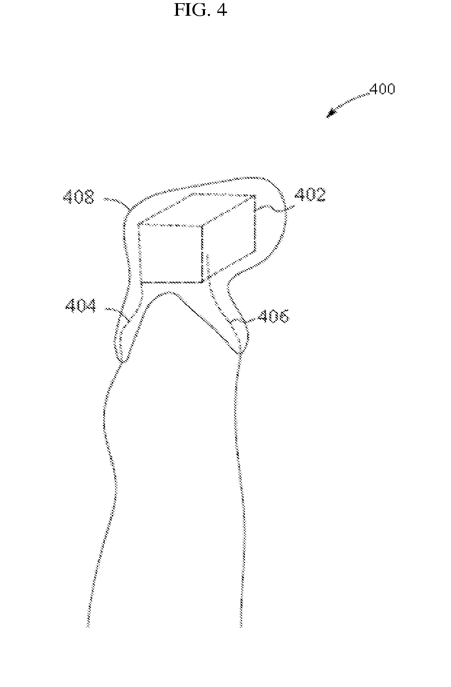

The component 310 can be any known component that is capable of being exposed to corrosive or otherwise extreme environments of the SCR system. The component, for example, can be the heater assembly 100 shown in FIG. 1, a temperature sensor such as a thermistor, a level sensor, or any other known device used in connection with an SCR system. Exemplary sensors and thermistors are described in more detail in U.S. Patent Application No. 13/495,716, filed on June 13, 2012, which is hereby incorporated by reference in its entirety. For example, FIG. 4 depicts one embodiment of such a sensor assembly 400. As shown, the sensor assembly 400 includes a sensor 402, which in one embodiment can be a negative temperature coefficient (NTC) ceramic thermistor. It will be understood that, in addition to thermistors, other types of sensors can form part of the sensor assembly 400. A first conductive lead 404 and a second conductive lead 406 extend from the sensor 402. A protective coating 408 encapsulates the sensor 402 and portions of the first conductive lead 404 and the second conductive lead 406 proximate to the sensor 402.

Referring back to FIG. 3, the component 310 can be disposed within the dosing tank 306 to sense a temperature and/or to modulate the temperature of the reductant fluid 308 in order to thaw the reductant fluid 308 if it is frozen. Thus, in some embodiments the component 310 can be placed anywhere in the tank that ensures thermal communication with the reductant 308 when the reductant is at even a low level in the dosing tank 306. That is, the component 310 can be at least partially immersed in the reductant fluid 308. Because the component 310 can be immersed in the reductant fluid 308-which can be highly corrosive, the component 310 can include a protective coating, such as those described herein. The coatings described herein can provide an impermeable barrier layer preventing moisture and corrosives, such as ammonia, from reaching the component. For example, the protective coating can include a fluoroelastic polymer that is a polymerization product of a reaction mixture that includes at least one co-monomer and tetrafluoroethylene and/or vinylidene fluoride. The co-monomer can include polypropylene, such as hexafluoropropylene.

In a second embodiment, a selective catalyst reduction system, comprising: an engine with at least one cylinder chamber, the engine being configured to emit an exhaust stream containing nitrous oxides: a dosing tank fluidly coupled to the exhaust stream and configured to contain a reductant fluid for reducing the nitrous oxides in the exhaust stream; a component disposed within the dosing tank; and a protective coating encapsulating at least a portion of the component, wherein the protective coating comprises a fluoroelastomeric polymer that is free of carbon black.

In a third embodiment, the selective catalyst reduction system is based on the second embodiment, wherein the component comprises a heating element configured to raise a temperature of the reductant fluid in the dosing tank.

In a fourth embodiment, the selective catalyst reduction is based on the second or third embodiment, wherein the component comprises a sensor assembly.

In a fifth embodiment, the selective catalyst reduction is based on the fourth embodiment, wherein the sensor assembly comprises a thermistor, and first and second conductive leads extending from the thermistor.

In a sixth embodiment, the selective catalyst reduction is based on the second or third or fourth or fifth embodiment, wherein the fluoroelastomeric polymer comprises the polymerization product of a reaction mixture comprising at least one co-monomer and tetrafluoroethylene and/or vinylidene fluoride.

In a seventh embodiment, the selective catalyst reduction is based on the sixth embodiment, wherein the at least one co-monomer includes a propylene.

In an eighth embodiment, the selective catalyst reduction is based on the seventh embodiment, wherein the propylene is hexafluoropropylene.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A heater assembly, comprising:
a heating element;
a lead operatively coupled to the heating element; and
a protective coating encapsulating at least a portion of the heating element,
wherein the protective coating comprises a fluoroelastomeric polymer that is free of carbon black.

2. The heater assembly of claim 1, wherein the fluoroelastomeric polymer comprises the polymerization product of a reaction mixture comprising at least one co-monomer and tetrafluoroethylene and/or vinylidene fluoride.

3. The heater assembly of claim 2, wherein the at least one co-monomer includes a propylene.

4. The heater assembly of claim 3, wherein the propylene is hexafluoropropylene.

5. The heater assembly of anyone of claims 1 to 4, wherein the heating element comprises an extruded aluminum heat sink.

6. The heater assembly of anyone of claims 1 to 5, further comprising a polymer casing layer disposed over at least a portion of the heating element.

7. The heater assembly of claim 6, wherein the protective coating is disposed on top of the polymer casing layer.

8. The heater assembly of claim 6 or 7, wherein the polymer casing layer is formed of at least one of an aliphatic polyamide and a high density polyethylene.

9. A selective catalyst reduction system, comprising:
an engine with at least one cylinder chamber, the engine being configured to emit an exhaust stream containing nitrous oxides;
a dosing tank fluidly coupled to the exhaust stream and configured to contain a reductant fluid for reducing the nitrous oxides in the exhaust stream;
a component disposed within the dosing tank; and
a protective coating encapsulating at least a portion of the component, wherein the protective coating comprises a fluoroelastomeric polymer that is free of carbon black.

10. The selective catalyst reduction system of claim 9, wherein the component comprises a heating element configured to raise a temperature of the reductant fluid in the dosing tank.

11. A method of coating a heater assembly, comprising:
suspending a fluoroelastomeric polymer in an organic carrier solvent;
adjusting a viscosity of the organic carrier solvent;
cooling the suspended fluoroelastomeric polymer to a temperature below ambient temperature;
immersing a heater assembly into the cooled fluoroelastomeric polymer;
withdrawing the heater assembly from the fluoroelastomeric polymer;
permitting at least some of the organic carrier solvent to evaporate after the step of withdrawing the heater assembly, thereby producing a conformal layer of fluoroelastomeric polymer; and
curing the conformal layer to produce a coated heater assembly.

12. The method of claim 11, further comprising repeating the steps of immersing the heater assembly, withdrawing the heater assembly, and permitting at least some of the organic carrier solvent to evaporate to form a plurality of conformal layers.

13. The method of claim 11 or 12, wherein permitting at least some of the organic carrier solvent to evaporate includes drying at ambient conditions for at least about 2 minutes.

14. The method of anyone of claims 11 to 13, wherein curing includes heating the heater assembly to a temperature of at least about 100°C for about 30 minutes.

15. The method of anyone of claims 11 to 14, wherein curing includes heating the heater assembly to a predetermined temperature for a predetermined time selected to remove the organic carrier solvent and cross-link the fluoroelastic polymer.
